Europäisches Patentamt

(19) European Patent Office

Office européen des brevets

(11) Numéro de publication: **0 109 893**
**B1**

(12) # FASCICULE DE BREVET EUROPEEN

(45) Date de publication du fascicule du brevet:
**19.03.86**

(51) Int. Cl.⁴: **B 60 T 8/32,** B 60 T 8/26

(21) Numéro de dépôt: 83402184.2

(22) Date de dépôt: 10.11.83

(54) **Correcteur de freinage double circuit asservi à la décélération.**

(30) Priorité: 23.11.82 FR 8219573

(43) Date de publication de la demande:
30.05.84 Bulletin 84/22

(45) Mention de la délivrance du brevet:
19.03.86 Bulletin 86/12

(84) Etats contractants désignés:
**DE GB IT**

(56) Documents cités:
**DE - A - 2 236 294**
**DE - A - 2 904 046**
**DE - A - 3 138 933**
**FR - A - 2 258 991**
**FR - A - 2 421 770**
**FR - A - 2 428 553**
**FR - A - 2 437 962**
**FR - A - 2 502 087**
**GB - A - 2 003 240**

(73) Titulaire: **BENDIX France, Centre Paris Pleyel,**
**F-93521 St-Denis Cédex 01 (FR)**

(72) Inventeur: **Carre, Jean-Jacques, 59 boulevard de l'Est,**
**F-93340 le Raincy (FR)**

(74) Mandataire: **Le Moenner, Gabriel et al, SERVICE**
**BREVETS BENDIX 44, Rue François 1er, F-75008 Paris**
**(FR)**

LIBER, STOCKHOLM 1986

## Description

L'invention se rapporte aux correcteurs de freinage double circuit asservis à la décélération du véhicule sur lequel ils sont installés.

Dans le document DE-A- 2 236 294 qui correspond an préambule de la revendication 1 de la présente demande est décrit un correcteur double circuit comprenant un boîtier percé d'un alésage dans lequel sont montés un piston différentiel et un piston pilote, une première valve de correcteur étant commandée à la fois par le piston différentiel et le piston pilote et une seconde valve de correcteur montée fixe dans le boîtier étant commandée par le piston pilote, une force de ccmmande appliquée au piston différentiel sollicitant celui ci en contact avec le piston pilote et ce dernier en contact avec le boîtier dans une position de repos dans laquelle les deux valves de correcteur sont ouvertes.

Selon une première caractéristique de la présente invention, un correcteur de ce type est asservi à la décélération du véhicule au moyen d'une valve d'isolement, connuéen soi, commandée par une masse d'inertie, grâce à la disposition suivante: ledit piston pilote est réalisé en deux parties adjacentes définissant entre elles une chambre pilote et ladite valve d'isolement étant située sur un conduit aboutissant à ladite chambre pilote.

Selon une autre caractéristique de l'invention, ladite chambre pilote est divisée en deux compartiments par un passage reliant lesdits compartiments, une valve de sécurité étant montée dans ledit passage et commandée par celle des deux parties du piston pilote qui coopère avec la première valve de correcteur, ladite valve de sécurité étantfermée lorsque les pistons cccupent leurs positions de repos.

Les détails et avantages de l'invention apparaîtront plus clairement à la lecture de la description qui va suivre et se refére aux dessins annexés, dans lesquels:

La figure 1 est une représentation schématique d'un système de freinage incorporant un correcteur selon l'invention, représenté en coupe axiale,

La figure 2 représente une variante du correcteur de la figure 1, egalement en coupe axiale,

La figure 3 représente une seconde variante du correcteur de la figure 1, en coupe axiale, et

La figure 4 représente une troisème variante du correcteur de la figure 1, également en coupe axiale.

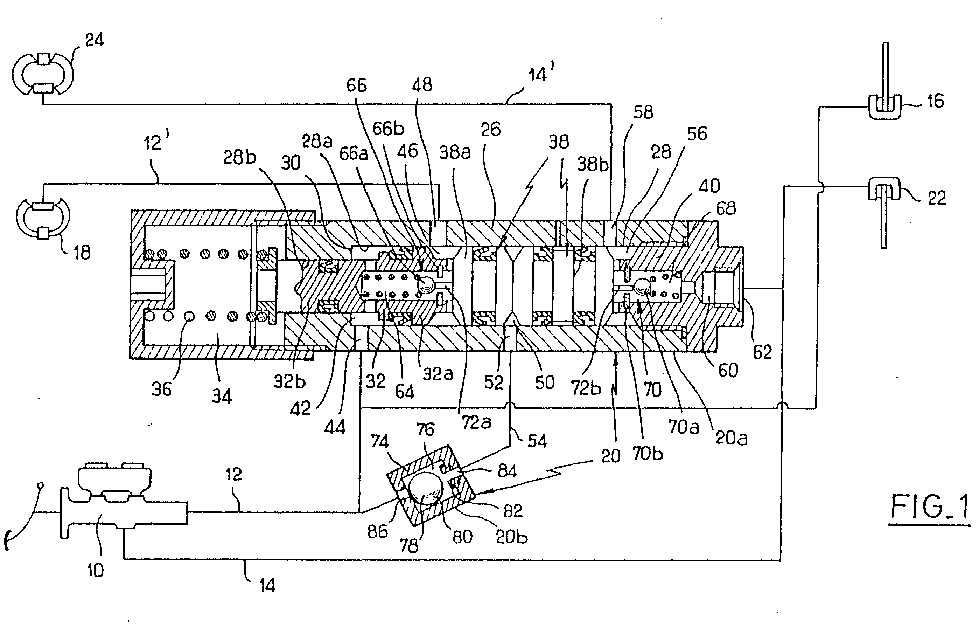

Le système de freinage de la figure 1 comprend un maître cylindre 10, encore appelé générateur de pression, du type tandem, refoulant du fluide sous pression dans deux conduits 12 et 14.

Le premier 12 est en liaison directe avec un frein de roue avant 16, situé sur le côté gauche du véhicule, il est également en liaison avec un frein de roue arrière 16, situé du côté droit du véhicule, via unensemble correcteur de pression 20 qui fait l'objet de la présente invention.

Le second conduit 14 est en liaison directe avec unfreinde roue avant droit 22 et en liaison avec un frein de roue arrière gauche 24 également via l'ensemble correcteur 20.

L'ensemble correcteur 20 se compose de deux parties: une partie formant correcteur pmoprement dit 20a et une partie formant valve d'isolement décélérométrique 20b.

La partie formant correcteur comprend un boîtier 26 percé d'un alésage étagé 28 constitue d'une portion de grand diamètre 28a et d'une portion de petit diamètre 28b, séparéespar un épaulement 30. Un pistonde correcteur étagé 32, formé d'une tete 32a et d'une queue 32b, coulisse de manière étanche dans les deux parties d'alésage 28a et 28b, la queue du piston se projetant à l'extérieur dans une chambre 34 où régne la pression atmosphérique et abritant un ressort 36 qui sollicite le piston 32 en éloignement de l'épaulement 30 vers une position de repos comme il sera vu plus loin.

Dans l'alésage 28a et en alignement avec le piston de correcteur, est monté coulissant un piston pilote 38, réalisé en deux parties, une partie 38a adjacente au piston étagé 32 et une partie 38b à l'opposé. Enfin,un bouchon 40 obture l'alésage 26a du côté de la partie 38b du piston pilote.

Les pistons sus-mentionnés définissent dans l'alésage 28 un certain nombre de chambres:
- une première chambre d'entrée 42 entre la tête et la queue du pistonétagé 32, reliée au premier conduit 12 via un premier orifice d'entrée 44,
- une première chambre de sortie 46, entre la tête du piston étagé etla première partie de piston pilote 38a, reliée au frein de roue arrière droit18 via un premier orifice de sortie 48 et un conduit 12',
- une chambre pilote 50 entre les deux parties 38a et 38b du piston pilote reliée à la partie formant valve d'isolement 20b via un orifice pilote 52 et un conduit 54.
- une seconde chambre de sortie 56 entre la seconde partie de piston pilote 38b et le bouchon 40, reliée au frein de roue arrière gauche 24 via un second orifice de sortie 58 et un conduit 14'.
- et une seconde chambre d'entrée 60, définie dans le touchon 40, reliée au second conduit 14 via un second orifice d'entrée 62.

Le piston étagé 32 comprend un passage 64 entre les premières chambres d'entrée et de sortie 42 et 46, dans lequel est montée une première valve de correcteur 66 dont l'opercule 66a est situé du côté de la première chambre d'entrée 42 et sollicité élastiquement vers un siège 66b.

Le bouchon 40 comprend également un passage 68 entre les secondes chambres d'entrée et de sortie 60 et 56, dans lequel est montée une seconde valve de correcteur 70 dont l'opercule 70a est situé du côté de la seconde chambre d'entrée 60 et sollicité élastiquement vers un siège 70b.

Les deux parties de piston pilote 38a et 38b portent chacune un doigt 72a, 72b se projetant axialement en direction des opercules 66a et 70a en traversant les sièges 66b et 70b

En l'absence de toute pression dans les chambres et les conduits précités, le ressort 36 repousse le piston 32 en butée contre la partie de piston pilote 38a, celle-ci à son tour en butée contre la seconde partie 38b et cette derniere en butée contre le bouchon 40, ce qui définit la position de repos de l'ensemble.

Dans cette position, les doigts 72a et 72b maintiennent les opercules de valve 66a et 70a dégagés de leurs sièges.

La partie formant valve d'isolement 20b comprend un corps 74 à l'intérieur duquel est définie une cavité 76 abritant une masse d'inertie 78 susceptible de se déplacer le long d'une rampe inclinée 60 lorsque la decélération dépasse une valeur prédéterminée pour venir obturer un siège de clapet 82 situé au débouché d'un orifice de sortie 84.

La partie formant valve d'isolement 20b comprend également un orifice d'entrée 86 relié au premier conduit 12 et son orifice de sortie 84 est relié à l'orifice pilote 52 de la partie formant correcteur 20a via le conduit 54.

Lors du freinage, le système décrit se comporte comme suit:

Durant une première phase, tant que la deceleration reste inférieure au seuil prédéterminé, la masse 78 reste immobile au bas de la rampe 60 et éloignée du siège 82, ce qui établit une libre communication entre le conduit 12 et la chambre pilote 50.

Il est aisé de constater que les pressions de sortie, c'est à dire les pressions qui régnent dans les chambres de sortie 46 et 56 et sont transmises aux freins arrière, restent égales aux pressions d'entrée, c'est à dire les pressions créés dans les conduits 12 et 14 par actionnement du maitre cylindre 10.

Cette égalité reste assurée même lorsque le piston se déplace à l'encontre du ressort 36 quand la pression d'entrée dans la chambre 42 dépasse une valeur prédéterminée. En effet, lors d'un tel deplacement, le piston étagé 32 s'éloigne de la partie 38a du piston pilote en provoquant la fermeture de la valve 66. A cause de cette fermeture, la pression dans la chambre de sortie 46 reste stationnaire et tout accroissement de la pression d'entrée, tant dans la chambre d'entrée 42 que dans la chambre pilote 50 provoque le rapprochement du piston étage 32 et de la partie de piston pilote 38a et, par suite, la réouverture de la valve 66.

Pour ce qui concerne la valve 70, on remarque que, pour autant que les pressions d'entrée régnant dans les conduits 12 et 14 sont égales, la seconde partie de piston pilote 38b reste immobile et la valve 70 reste par conséquent ouverte.

Durant le processus qui précède, on remarque que, à mesure que le piston 32 se déplace à l'encontre du ressort 36, la partie de piston pilote 38a se déplace conjointement avec le piston étagé 32 en s'éloignant de la seconde partie 38b.

Durant une seconde phase du freinage, lorsque la décélération dépasse un seuil prédéterminé, la masse 78 se déplace le long de la rampe 60 et vient obturer le siège 62. La communication entre le conduit 12 et la chambre pilote 50 est interrompue. Le volume de la chambre pilote 50 ne peut plus varier et les deux parties de piston pilote 38a et 38b ne peuvent plus se déplacer indépendemment l'une de l'autre et se comportent comme un ensemble monobloc.

A partir de ce moment, les pressions de sortie dans les conduits 12' et 14' subissent un accroissement inférieur à l'accroissement des pressions d'entrée dans les conduits 12 et 14, dans le rapport des sections de la queue et de la tête du piston étagé 32, comme expliqué plus en détail dans le document DE-A-2 236 294 déjà mentionné, auquel on se référera avantageusement.

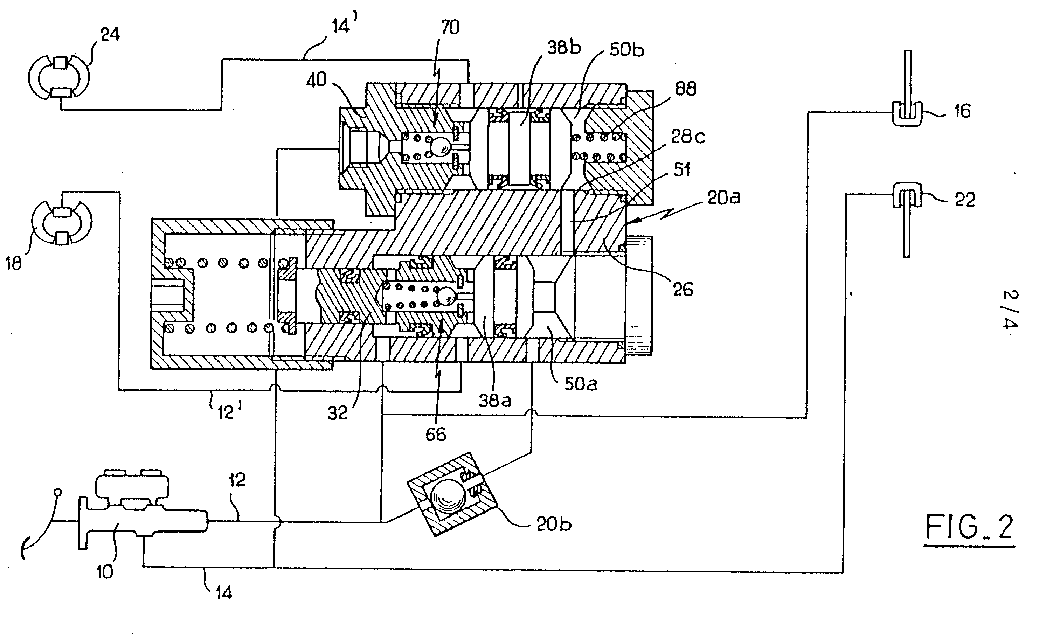

Dans la variante de la figure 2, où les références des éléments identiques sont les mêmes qu'â la figure 1, on a prévu de monter la seconde partie de piston pilote 38b et le bouchon 40 dans un alésage annexe 26c, la chambre pilote 50 étant alors divisée en deux sous chambres: 50a, dans l'alésage 28a, et 50b, dans l'alésage 28c, reliées par un canal 51. Dans le but de maintenir au repos la valve 70 en position ouverte, un léger ressort 88 repousse la partie de piston pilote 38b en butée contre le bouchon 40.

Le fonctionnement de cet appareil est identique à celui de l'appareil représenté à la figure 1.

Dans les deux cas, lors d'une déraillance de l'un ou l'autre des circuits de freinage, le fonctionnement est modifié comme suit:

a) défaillance du circuit alimenté par le conduit 12 qui se traduit par une absence de pression dans les chambres 42, 46 et 50; lorsque la pression dans la seconde chambre de sortie 56 atteint une valeur donnée, les pistons 32, 38a et 38b se déplacent ensemble à l'encontre du ressort 36 et la valve 70 se ferme. La pression admise en frein arrière gauche 24 restera donc limitée à cette valeur donnée.

b) défaillance du circuit alimenté par le conduit 14 qui se traduit par une absence de pression dans les chambres 60 et 56; Les pressions d'entrée et de sortie resteront égales tant que la décélération n'aura pas atteint la valeu, prédéterminée déjà évoquée, ce qui nécessitera d'atteindre des pressions nettement plus élevées compte tenu du non actionnement des freins 22 et 24. Si la décélération atteint cette valeur, la pression de sortie transmise au frein 18 aura un accroissement inférieur à l'accroissement de la pression d'entrée provenant du conduit 12, comme déjà expliqué, puisque la partie de piston pilote 38a reste bloquée dans la position atteinte par suite de l'isolement de la chambre pilote 50.

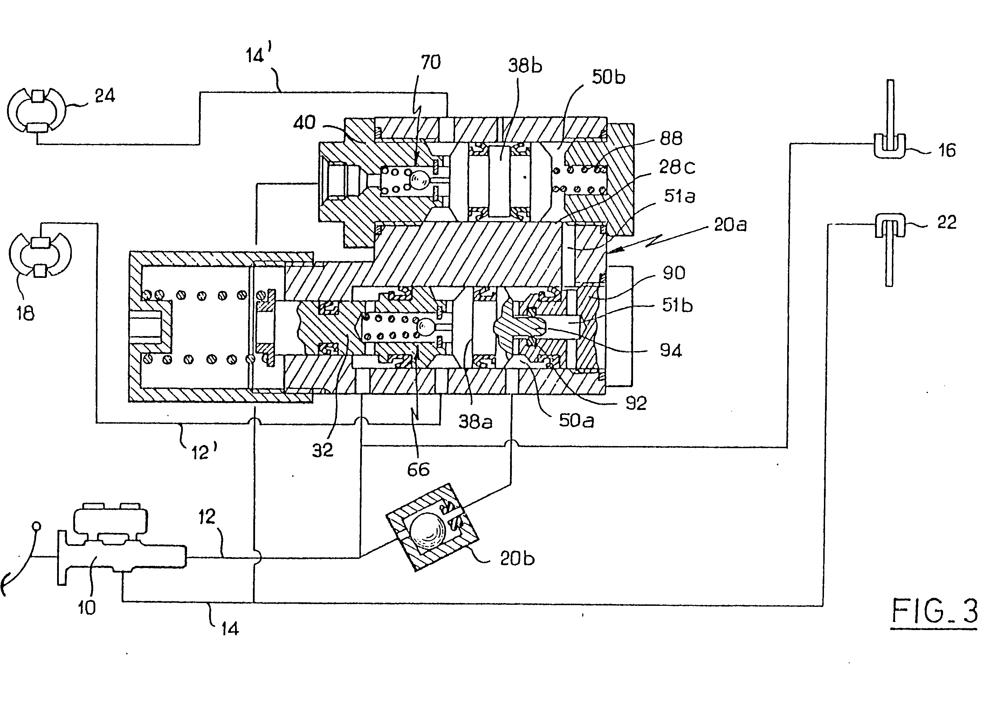

La seconde variante de la figure 3, où les éléments identiques sont désignés par les mêmes références, présente, par comparaison avec la variante de la figure 2, les différences suivantes:

le canal 51 comporte une première partie 51a dans le boîtier 26 et une seconde partie 51b ménagée axialement dans un bouchon additionnel 90 fixé dans l'alésage 28a en regard de la première partie de piston pilote 38a. Au débouché de la partie de canal 51b est prévu unjoint annulaire 92 formant valve de securite et la partie de piston pilote 38b comporte une extension axiale 94 qui traverse de manière étanche le joint valve 92. Comme represente, l'orifice pilote ne débouche que dans la sous chambre 50a de la chambre pilote. Cette modification n'affecte pas le fonctionnement normal du système puisque lors de la mise en pression simultanée des deux conduits 12 et 14, des pressions égales s'établiasent dans les sous chambres 50a et 50b de la chambre pilote 50.

Avant isolement de la chambre pilote 50 par fermeture de la partie formant valve d'isolement 20b, la partie de piston pilote 38a se déplace conjointement avec le piston étagé 32, l'extension axiale 94 se dégageant du joint valve 92 pour retablir la continuité de la chambre pilote 50. Après isolement de la chambre pilote 50, les deux parties de piston pilote 38a et 38b se déplacent commée formant un tout comme déjà explique.

Par contre, le comportement en cas de défaillance est modifié de la manière suivante:

a) défaillance du circuit alimenté par le conduit 12: compte tenu de l'absence de pression dans les chambres 42, 46 et 50, la partie de piston pilote 38a reste immobile et l'extension axiale 94 demeure engagée dans le joint valve 92. La sous chambre 50b étant isolée, la seconde partie de piston pilote 38b ne peut se déplacer en éloignement du bouchon 40, ce qui maintient la valve 70 en position ouverte. La pression de sortie admise au frein 24 reste en toutes circonstances égale à la pression d'entrée délivréevia le conduit 14.

b) défaillance du circuit alimenté par le conduit 14: le comportement est identique à celui des modes de réalisation précédents.

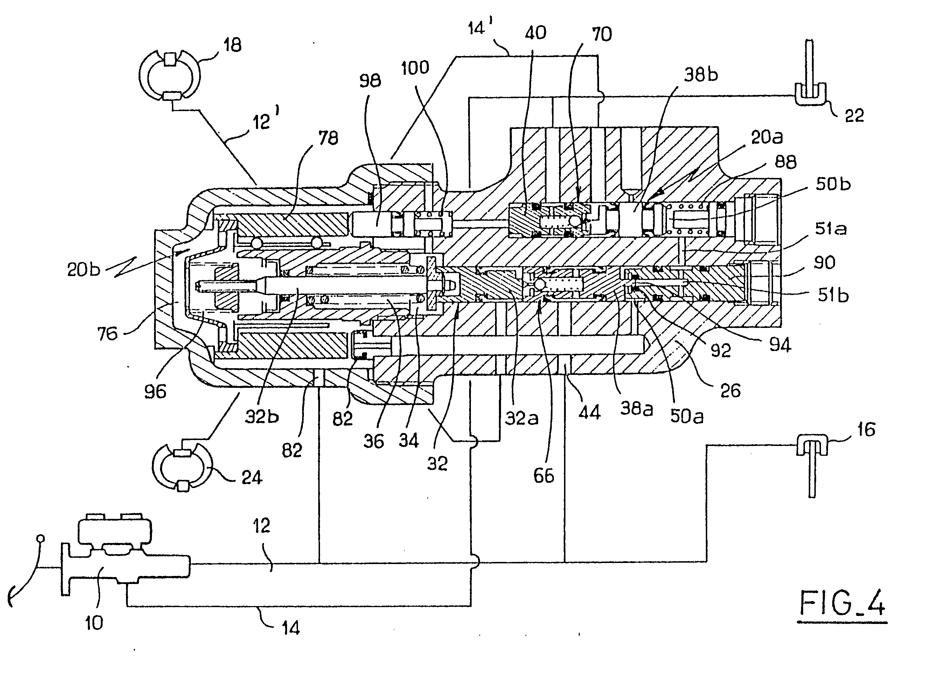

A la figure 4 on a représenté une troisième variante du type de la variante de la figure 3, dans laquelle la partie formant valve d'isolement 20b est intégrée dans le même boîtier 26 que la partie formant correcteur 20a, les éléments identiques y sont toujours désignés par les mêmes références.

On remarquera que l'arrangement "masse d'inertie 78 en déplacement le long d'une rampe 80" y a été remplacé par un arrangement "masse d'inertie 78 en déplacement à l'encontre d'un ressort 96".

Ce mode de réalisation présente des similitudes avec l'appareil décrit dans la demande de brevet FR-A-2 502 087 à laquelle on pourra avantageusement se référer, notamment en ce qui concerne la disposition selon laquelle le piston étagé 32 modifie le tarage du ressort 96 de rappel de la masse d'inertie afin que la décélération prédéterminée pourlaquelle la masse se déplace pour fermer le siège 62 soit rendue variable en fonction de la pression de freinage.

On remarquera également d'autres dispositions annexes, parmi lesquelles:

- un piston de rappel 98 chargé par un ressort 100 assure un rappel obligatoire de la masse 76 dans sa position dégagée du siège 62 lorsque la pression est relàchée.
- la queue du piston étagé 32 traverse la chambre atmosphérique 34 et se projette dans la cavité 76 de la partie formant décéléromètre 20 b.
- la valve 66 est montée dans la partie de piston pilote 38a et la position des premières chambres d'entrée et de sortie 42, 46 est inversée.
- Bien que le raccordement de la cavité 76 au conduit 12 ait été représente par un conduit exterieur on pourra avantageusement prévoir un canal *A l'intérieur du boîtier 25 débouchant dans l'orifice 44, à l'instar de l'appareil représenté dans la demande FR-A-2 502 0870 déjà mentionnée.

**Revendications**

1. Correcteur de freinage double circuit asservi à la décélération, pour système de freinage d'un véhicule, comprenant un toitier (26) percé d'un alésage (28) en deux parties de grand et petit diamètre (28a, 28b), un piston de correcteur (32) étagé ayant une tete (32a) et une queue (32b) coulissant respectivement dans les parties de grand et de petit diamètre de l'alésage (28), un piston pilote (38) adjacent à la tête (32a) du piston étagé et coulissant également dans la partie de grand diamètre (28a) de l'alésage, et un bouchon fixe (40) refermant l'alesage (28) à l'opposé du piston pilote, un ressort (36) en appui sur la queue (32b) du piston étagé et repoussant ce dernier en butée contre le piston pilote (38) et celui-ci en butée contre ledit bouchon (40), ce qui définit la position de repos desdits pistons, une première chambre d'entrée (42) définie entre ledit piston étagé (32)et ledit alésage (28a), une première chambre de sortie (46) définie entre la tête de piston (32a) et le piston pilote (38), une seconde chambre de sortie (56) entre le piston pilote (38) et le bouchon (40), et une seconde chambre d'entrée (60) définie dans ledit bouchon (40), lesdites chambres d'entrée étant à relier aux deux sorties d'un générateur de pressionde type tandem (10), et lesdites chambres de sortie étant à relier à des freins arrière (18, 24) d'un côté et de l'autre du véhicule, un premier passage (64) entre les premières chambres d'entrée (42) et de sortie (46), un second passage (68) entre les secondes chambres d'entrée (60) et de sortie (56), une première et une seconde valves de correcteur (66, 70) dans lesdits passages, la première (66) étant commandée à la fois par ledit piston étagé (32) et par ledit piston pilote (38) et la seconde (70) étant comméndée par ledit piston pilote (38), caractérisé en ce que ledit piston pilote (38) est réalisé en deux parties adjacentes (38a, 38b) définissant entre elles une chambre pilote (50), cette dernière etant reliée à la première chambre d'entrée (42) via une valve d'isolement (20b),

0 109 893

connue en soi, commandée par une masse d'inertie (78) sensible à la décélération dudit véhicule.

2. Correcteur de freinage selon la revendication 1, caractérisé en ce que ledit boîtier comporte un alésage annexe (28c) danslequel sont montés la seconde partie de piston pilote (38b) et ledit bouchon (40), ladite chambre pilote (50) étant divisée en deux sous-chambres: l'une (50a) dans l'alésage (28a) et l'autre dans l'alésage annexe (28c), communiquant via un canal (51), ledit orifice pilote (52) ouvrant dans la première sous-chambre (50a).

3. Correcteur de freinage selon la revendication 2, caractérisé en ce qu'il comprend un ressort (88) repoussant la partie de piston pilote (3bb) en butée contre le touchon (40).

4. Correcteur selon la revendication 3, caractérisé en ce que ledit canal (51) comprend une première partie (51a) dans le boîtier (26) et une seconde partie (51b) dans un bouchon annexe (90) fixé dans l'alésage (28a) en regard de la première partie de piston pilote (38a), cette seconde partie de canal (51b) abritant un joint valve annulaire (92) et ladite partie de piston pilote (38a) comportant une extension axiale (94) coopérant avec ledit joint valve (92) pour former une valve de sécurité isolant les deux sous-chambres pilotes (51a, 51b) au repos.

5. Correcteur selon l'une quelconque des revendications 1 à 4, caractérisé en ce que ladite valve d'isolement (20b) est abritée dans le même boîtier (26).

**Claims**

1. Deceleration responsive dual circuit braking regulator for a brake system of a vehicle, comprising a casing (26) provided with a bore (28) having a large diameter portion (28a) and a small diameter portion (28b), a stepped regulator piston (32) having a head portion (32a) and a rear portion (32b) respectively sliding in the large and small diameter portions of the bore (28), a pilot piston (38) adjacent the head portion (32a) of the stepped piston and also sliding in the large diameter portion (28a) of the bore, and a fixed plug (40) closing the bore (28) opposite the pilot piston, a spring (36) engaging the rear portion (32b) of the stepped piston and urging the latter in abutment with the pilot piston (38) and the latter in abutment with the plug (40) thereby defining the rest positions of said pistons, a first inlet chamber (42) defined between said stepped piston (32) and said bore (28a), a first outlet chamber (46) defined between the head portion (32a) of the piston and the pilot piston (38), a second outlet chamber (56) between the pilot piston (38) and the plut (40), and a second inlet chamber (60) defined in said plug (40), said inlet chambers being adapted to be connected to a pair of outlets of a pressure generator (10) of the tandem type, and said outlet chambers being adapted to be connected to the rear brake (18,24) on one or the other side of the vehicle, a first passage (64) between the first inlet (42) and outlet (46) chambers, a second passage (68) between the second inlet (60) and outlet (56) chambers, first and second regulating valves (66,70) in said passages, the first one (66) being controlled simultaneously by said stepped piston (32) and said pilot piston (38), and the second one (70) being controlled by said pilot piston (38), characterized in that said pilot piston (38) in comprised of two adjacent portions (38a,38b) defining between them a pilot chamber (50), the latter being connected to the first inlet chamber (42) via a known per se isolating valve (20b) controlled by an inertia weight (78) responsive to the deceleration of the vehicle.

2. Braking regulator according to claim 1, characterized in that said casing comprises a secondary bore (28c) wherein the second portion of the pilot piston (38b) and said plug (40) are mounted, said pilot chamber (50) being divided into a pair of subchambers, one (50a) of which is in the bore (28a) and the other one of which is in the secondary bore (28c), and both of which communicate via a channel (51), said pilot orifice (52) opening into the first subchamber (50a).

3. Braking regulator according to claim 2, characterized in that it comprises a spring (88) urging the portion of the pilot piston (38b) in abutment with the plug (40).

4. Braking regulator according to claim 3, characterized in that said channel (51) comprises a first portion (51a) in the casing (26) and a second portion (51b) in a secondary plug (90) fixed in the bore (28a) opposite the first portion of the pilot piston (38a), said second channel portion (51b) including an annular valve seal (92) and said portion of the pilot piston (38a) comprising an axial extension (94) cooperating with said valve seal (92) for forming a security valve isolating the two pilot subchambers (51a,51b) in the rest postion.

5. Braking regulator according to any of claims 1 to 4, characterized in that said isolating valve (20b) is disposed in the same casing (26).

**Patentansprüche**

1. Verzögerungsanhängiger Zweikreisbremsdruckregler für die Bremsanlage eines Fahrzeuges, mit einem Gehäuse (26), das eine Bohrung (28) mit einem Abschnitt (28a) großen Durchmessers und einem Abschnitt kleinen Durchmessers (28b) aufweist, einem Regelkolben in Form eines Stufenkolbens (32) mit einem Kopfabschnitt (32a) und einem rückwärtigen Abschnitt (32b), die in dem Abschnitt großen Durchmessers bzw. kleinen Durchmessers der Bohrung (28) gleiten, einem Vorsteuerkolben (38), der angrenzend an dem Kopfabschnitt (32a) des Stufenkolbens angeordnet ist und ebenfalls in dem

5

Bohrungsabschnitt (28a) großen Durchmessers gleitet, und einem festgelegten Stopfen (40), der die Bohrung (28) gegenüber dem Vorsteuerkolben verschließt, einer Feder (36), die an dem rückwärtigen Abschnitt (32b) des Stufenkolbens anliegt und diesen in Anlage mit dem Vorsteuerkolben (38) und den letzteren in Anlage mit dem Stopfen (40) drückt, was die Ruhestellung der Kolben definiert, einer ersten Einlaßkammer (42), die zwischen dem Stufenkolben (32) und der Bohrung (28a) gebildet ist, einer ersten Auslaßkammer (46), die zwischen dem Kopfabschnitt (32a) und dem Vorsteuerkolben (38) gebildet ist, einer zweiten Auslaßkammer (56) zwischen dem Vorsteuerkolben (38) und dem Stopfen (40) und einer zweiten Auslaßkammer (60), die in dem Stopfen (40) gebildet ist, wobei die Einlaßkammern an zwei Ausgänge eines Druckgenerators (10) in Tandembauweise anschließbar sind und die Auslaßkammern mit rückwärtigen Bremsen (18,24) auf der einen oder anderen Seite des Fahrzeuges verbindbar sind, einem ersten Kanal (64) zwischen der ersten Einlaßkammer (42) und der ersten Auslaßkammer (46), einem zweiten Kanal (68) zwischen der zweiten Einlaßkammer (60) und der zweiten Auslaßkammer (S6), einem ersten und einem zweiten Regelventil (66,70) in diesen Kanälen, von denen das erste Regelventil (66) gleichzeitig von dem Stufenkolben (32) und dem Vorsteuerkolben (38) und das zweite Regelventil (70) von dem Vorsteuerkolben (38) gesteuert werden, dadurch gekennzeichnet, daß der Vorsteuerkolben (38) aus zwei aneinander anliegenden Abschnitten (38a,38b) besteht, die zwischen sich eine Vorsteuerkammer (50) bilden, wobei die Vorsteuerkammer mit der ersten Ein-laßkammer (42) über ein an sich bekanntes Sperrventil (20b) verbunden ist, das von einer auf die Fahrzeugverzögerung ansprechenden Trägheitsmasse (78) gesteuert wird.

2. Bremsdruckregler nach Anspruch 1, dadurch gekennzeichnet, daß das Gehäuse eine Nebenbohrung (28c) aufweist, in der der zweite Abschnitt des Vorsteuerkolbens (38b) und der Stopfen (40) angebracht sind, und daß die Vorsteuerkammer (50) in zwei Unterkammern unterteilt ist, von denen die eine (50a) in der Bohrung (28a) und die andere in der Nebenbohrung (28c) angeordnet ist und die über einen Kanal (51) miteinander in Verbindung stehen, wobei die Vorsteueröffnung (52) in der ersten Unterkammer (50a) mündet.

3. Bremsdruckregler nach Anspruch 2, gekennzeichnet durch eine Feder (88), die den Abschnitt des Vorsteuerkolbens (38b) in Anlage mit dem Stopfen (40) drückt.

4. Bremsdruckregler nach Anspruch 3, dadurch gekennzeichnet, daß der Kanal (51) einen ersten Abschnitt (51a) im Gehäuse (26) und einen zweiten Abschnitt (51b) im Nebenstopfen (90) aufweist, der in der Bohrung (28a) gegenüber dem ersten Abschnitt des Vorsteuerkolbens (38a) festgelegt ist, wobei dieser zweite Kanalabschnitt (51b) eine ringförmige Ventildichtung (92) beherbergt und der besagte Abschnitt des Vorsteuerkolbens (38a) eine axiale Verlängerung (94) aufweist, die mit der Ventildichtung (92) zusammenwirkt, um ein Sicherheitsventil zu bilden, das die beiden Vorsteuer- und Unterkammer (51a,51b) in der Ruhestellung isoliert.

5. Bremsdruckregler nach einem der Ansprüche 1-4, dadurch gekennzeichnet, daß das Sperrventil (20b) in dem gleichen Gehäuse (26) untergebracht ist.

FIG_1

FIG_2

FIG_3

FIG_4